# EUROPEAN PATENT APPLICATION

(11) **EP 1 588 630 A1**
(43) Date of publication of application: **26.10.2005**
(21) Application number: 04447100.1
(22) Date of filing: 20.04.2004
(51) Int. Cl.: A23L 1/39, A23L 1/24, A23L 1/05

(54) **Pourable food thickening composition**

(71) Applicant: Vandemoortele Izegem naamloze vennootschap, 8870 Izegem (BE)
(72) Inventor: Flypo, John, 8870 Izegem (BE); De Laporte, André, 8870 Izegem (BE); Loosveld, Anne-Marie, 8870 Izegem (BE)
(74) Representative: Luys, Marie-José A.H.

(57) **Abstract**

This invention relates to a pourable food thickening composition for thickening a water based liquid, wherein the food thickening composition comprises an amount of a fatty thickening composition, the fatty thickening composition comprising
(a) an amount of an at least partly hydrogenated fat and
(b) an amount of at least one fat which is liquid at room temperature;
and in that the food thickening composition comprises an amount of a hydrophilic thickening agent for thickening the aqueous phase.

## Description

The present invention relates to a pourable food thickening composition for thickening a water based liquid as disclosed in the preamble of the first claim.

The roux known from the state of the art is a composition containing milk or water as an aqueous phase and a fatty phase. The known roux is prepared by mixing an amount of flour into molten, browned fat. To prepare a thickened sauce which contains a fatty phase, gradually an amount of liquid, usually water or milk, is added while heating and stirring the mixture. With this type of preparation however there is a serious risk to the formation of lumps when adding the aqueous phase. This leads to an uneven distribution of the fat phase over the aqueous phase.

There is thus a need to a convenient food thickening composition for water based liquids for example sauces or soups, which contains a fat phase and with which the risk to the formation of lumps may be reduced.

It is therefore an object of the present invention to provide a food thickening composition with which the risk to the formation of lumps may be reduced.

This is achieved according to the present invention with the technical features of the characterizing part of the first claim.

The pourable food thickening composition of this invention is characterized in that it comprises an amount of a fatty thickening composition, the fatty thickening composition comprising
(a) an amount of an at least partly hydrogenated fat and
(b) an amount of at least one fat which is liquid at room temperature;
and in that the food thickening composition comprises an amount of a hydrophilic thickening agent for thickening the aqueous phase.

As the food thickening composition of this invention is pourable, mixing with a further liquid composition is facilitated.

When mixing the food thickening composition of this invention to a water based liquid, the presence of the hydrophilic thickening composition involves thickening of the water phase. Simultaneously the fatty thickening composition gets distributed over the aqueous phase and in that way exerts an additional thickening action to the water based liquid.

The inventor has observed that a liquid food composition containing the pourable food thickening composition of this invention may be stored at elevated temperatures for example 85°C, for several hours, while there is a minimum risk to changing the properties of the food composition. When storing state of the art sauces containing both an aqueous and fatty phase at such temperature, a disintegration of the sauce and separation of the fatty and aqueous phase occurs after a relatively short period of time already. This is unwanted as the appearance and taste of the product are adversely affected.

The inventor has also observed that the liquid, pourable food composition of this invention provides a thickened water based liquid with a minimum risk to skin formation, which can be stored at low temperature and heated to the consumption temperature with a minimum risk to the formation of lumps and skin. The inventor has further observed that the water based liquid containing the food thickening composition of this invention is freeze stable and suitable for conservation through pasteurization with a minimum risk to adversely affecting the appearance and taste.

Another embodiment of the invention is characterized in that the at least partly hydrogenated fat is present in an amount of between 1 and 15 wt. %, preferably between 2 and 6 wt. % with respect to the weight of the fatty thickening composition.

A further embodiment of the invention is characterised in that the at least partly hydrogenated fat is a fully hydrogenated fat.

A still further embodiment of the invention is characterized in that as the at least partly hydrogenated fat, use is made of an at least partly hydrogenated liquid oil. The at least partly hydrogenated fat may be any suitable fat for food known to the person skilled in the art, partly or fully hydrogenated. The at least partly hydrogenated fat may also be a liquid oil which is partly but preferably fully hydrogenated. Suitable oils for use with the composition of this invention include or marine oils, vegetable oils, refined vegetable oils, for example rapeseed oil, sunflower oil, corn oil, soy oil, palm oil or fractions thereof, or mixtures of two or more of these oils. The liquid oils which contain at least 15 wt. % with respect to the weight of the fatty thickening composition of fatty acids having a carbon atom chain length with more than 18 carbon atoms are preferred. The fully hydrogenated high erucic acid rapeseed oil, containing a significant amount of C22 saturated fatty acid, which is believed to crystallise in the form of needle shaped crystals that are stable in the β' crystal form, has been found capable of imparting a higher viscosity and gel like properties as compared to the β form when dispersed in oil. Therefore, it is preferred to incorporate in the fatty thickening composition an amount of fully hydrogenated high erucic acid rapeseed oil.

An additional embodiment of the invention is characterised in that the fatty thickening composition comprises between 85 and 99 wt. % of a liquid oil, preferably between 94 and 98 wt. % with respect to the weight of the fatty thickening composition. Suitable liquid oils include rapeseed oil, sunflower oil, corn oil, soy oil, palm oil or fractions thereof, and any other suitable oils generally know to the person skilled in the art. The person skilled in the art will be capable of selecting from the known liquid oils, the variety most suitable for the intended application.

Another embodiment of the present invention is characterized in that the food thickening composition comprises between 30 and 70 wt. % with respect to the total weight of the composition, preferably between 30 and 60 wt. %, more preferably between 40 and 60 wt. % of the fatty thickening composition. Below a content of 30 wt. % there is a risk that the food thickening composition becomes too gelly. Above a content of 70 wt.% there is an increasing risk to oiling out of the fatty phase. In this embodiment the composition preferably contains between 30 and 70 wt. % with respect to the total weight of the composition of the hydrophilic thickening agent for the aqueous phase. Below 30 wt. % the thickening effect produced by the thickening composition of this invention may become low; above 60 wt. % there is a risk to decreasing the ease with which the fatty thickening composition may be handled and dispersed into the aqueous phase when preparing the final liquid food composition.

The composition of the present invention may further contain an amount of lecithin as a lubricating agent to render the composition more fluent. Suitable lecithin sources include soy, rapeseed, etc. The person skilled in the art will be able of selecting among the known lecithin varieties, the most suitable one. Suitable concentrations of lecithin mostly vary between 0 and 0.5 wt. % with respect to the total weight of the composition.

In another embodiment, the composition of the invention may further comprise an mount of at least one citric acid ester. The amount of citric acid ester present in the food thickening composition is not critical to the invention. Suitable concentrations vary between 0 and 5 wt. % with respect to the total weight of the composition. Citric acid esters often have a whitening effect to the liquid food compositions containing them and decrease the risk to the formation of so called "fat eyes" on top of the food. Furthermore they are capable of increasing the viscosity.

A further embodiment of this invention is characterised in that the hydrophilic thickening agent for thickening the aqueous phase is preferably a powder which powder contains at least one component from the group of starch, modified starch, guar, xanthan or a mixture of two or more of these components. Still other compounds for thickening the aqueous phase may be added to impart specific functionalities to the thickened food composition, for example freeze-thaw stability, heat stability. Other components that may be added to the aqueous phase thickening agent powder include spices, colorants, flavors, herbs, minerals, etc.

The characteristics of the hydrophilic thickening agent powder affect the dispersability of the hydrophilic thickening agent in the food thickening composition and the physical stability in the food thickening composition. The aqueous phase thickening agent powder will mostly have a particle density below 1.55 g/cm³, measured with a pycnometer. Preferably 95% of the particles have a particle size smaller than 150 µm and 5 % bigger than 150 µm as determined by sieving.

The pourable food thickening composition of this invention is suitable for thickening water based liquids or liquid or semi-liquid food compositions, or milk or recombined milk based liquids. The pourable thickening composition of this invention is suitable for thickening for example soups, soups containing pieces of vegetables and/or meat, sauces with or without pieces of food, water based sauces, cream containing sauces, fillings, cheese containing fillings etc..

The invention is further elucidated in the examples given below.

### Example 1: A first method for the preparation of the pourable food thickening composition.

### a) Preparation of the fatty thickening composition.

3 parts of fully hardened high erucic acid rapeseed oil and 97 parts of rapeseed oil were heated to 75°C and blended. The blend was cooled on a scraped surface heat exchanger and packed.

### b) Preparation of the pourable food thickening composition.

60 parts of the fatty thickening composition are mixed with 40 parts of hydrophilic thickening agent powder consisting of starch, starch like products and hydrocolloids with a Stephan mixer for 5 minutes at 1700 rpm.

### Example 2: A second method for the preparation of the pourable food thickening composition.

### a) preparation of a fatty hardstock

25 parts of a fully hydrogenated high erucic acid rapeseed oil and 75 parts rapeseed oil are blended at 70°C, cooled on a scraped surace heat exchanger, and packed as 2 kg bars.

### b) Preparation of the pourable food thickening composition.

To a Scanima mixing machine, with a liftable rotor-stator turbo mixer in combination with a scraper the following products are added: 43.975 parts by weight of refined, liquid sunflower vegetable oil, 2 parts of citric acid esters, 0.025 parts of soylecithin and 48 parts of a hydrophilic thickening agent for thickening the aqueous phase, consisting of starch, modified starch and hydrocolloids. Mixing is carried out under heavy stirring during 60 sec under saturated nitrogen atmosphere with the stator up, so as to introduce gas bubbles in the suspension. Stirring is continued until a homogeneous suspension of the powder in the oil is obtained.

To the thus obtained mixture 6 parts of the fatty hardstock of step (a) are added and mixed under gently stirring during 3 minutes at a mixing speed of 2.75 under saturated nitrogen atmosphere, with the stator up.

Thereafter, the mixture is further stirred for 50 seconds at high shear, speed of 6, under saturated nitrogen atmosphere, with the stator down. Thereby, fine gas bubbles are divided over the mixture to render the product less sensitive to oiling out, to obtain a less fatty look and a somewhat whiter product and to improve the oxidation stability of the product.

### Example 3: preparation of a brown sauce.

A dry mixture was of bouillon, tomato, salt, sugar, caramel, citric acid and spices. 3.6 parts of this mixture were added to 88.9 parts of water and heated to 50°C. Thereafter 7.5 parts of the pourable food thickening composition prepared according to example 2 were added while mixing at a rotation speed of at least 100 rpm. The thus obtained mixture was let to boil for 2 minutes and served.

### Example 4: preparation of a béchamel sauce.

A dry mixture was of 0.56 parts of salt, 0.07 parts of white pepper and 0.05 parts of nutmeg. This mixture was added to 92.8 parts of full fat milk and heated to 50°C. Thereafter 6.5 parts of the pourable food thickening composition prepared according to example 2 were added while mixing at a rotation speed of at least 100 rpm. The thus obtained mixture was let to boil for 2 minutes and served.

### Example 5: preparation of an archiduc sauce.

A dry mixture was made of bouillon, skimmed milk powder, salt , spices, lactose and citric acid. 2.4 parts of this mixture were added to 59.7 parts of water and 13.7 parts of cream and heated to 50°C. Thereafter 4.5 parts of the pourable food thickening composition prepared according to example 2 were added while mixing at a rotation speed of at least 100 rpm. To the thus obtained mixture 1.8 parts of red port and 17.9 parts of mushrooms were added. The thus obtained mixture was heated to boil for 2 minutes and served.

### Example 6: preparation of a filling for a cheese croquette.

0.8 parts of salt, 0.1 parts of white pepper were added to 57.6 parts of full fat milk and heated to 50°C. Thereafter 18.5 parts of the pourable food thickening composition prepared according to example 2 were added while mixing at a rotation speed of at least 100 rpm. To the thus obtained mixture 23 parts of cheese were added, the cheese was let to melt. A dough was obtained. The dough was well mixed, let to cool and shaped to form croquettes. The croquettes were encapsulated with a layer of crumbs, fried at a temperature of 160°C and frozen.

## Claims

1. A pourable food thickening composition for thickening a water based liquid, **characterised in that** the food thickening composition comprises an amount of a fatty thickening composition, the fatty thickening composition comprising
(a) an amount of an at least partly hydrogenated fat and
(b) an amount of at least one fat which is liquid at room temperature;
and **in that** the food thickening composition comprises an amount of a hydrophilic thickening agent for thickening the aqueous phase.

2. A composition as claimed in claim 1, **characterised in that** the at least partly hydrogenated fat is present in an amount of between 1 and 15 wt. %, preferably between 2 and 6 wt. % with respect to the weight of the fatty thickening composition.

3. A composition as claimed in claim 1 or 2, **characterised in that** the at least partly hydrogenated fat is a fully hydrogenated fat.

4. A composition as claimed in any one of claims 1-3, **characterised in that** the fatty thickening composition comprises between 85 and 99 wt. % of a liquid oil, preferably between 65 and 88 wt. % with respect to the weight of the fatty thickening composition.

5. A composition as claimed in any one of claims 1-4, **characterised in that** the food thickening composition comprises between 30 and 70 wt. % with respect to the total weight of the composition, preferably between 40 and 60 wt. % of the fatty thickening composition, and between 30 and 60 wt. % with respect to the total weight of the composition of the hydrophilic thickening agent.

6. A composition as claimed in any one of claims 1-5, **characterised in that** as the at least partly hydrogenated fat, use is made of an at least partly hydrogenated vegetable or marine oil or a blend of two or more of such oils, containing at least 15 wt. % with respect to the weight of the fatty thickening composition of fatty acids having a carbon atom chain length with more than 18 carbon atoms.

7. A composition as claimed in any one of claims 1-6, **characterised in that** as the at least partly hydrogenated fat oil use is made of fully hydrogenated high erucic acid rapeseed oil.

8. A composition as claimed in any one of claims 1-7, **characterised in that** the composition contains an amount of lecithin.

9. A composition as claimed in claim 8, **characterised in that** the composition contains between 0 and 0.5 wt. % of lecithin.

10. A composition as claimed in any one of claims 1-9, **characterised in that** the composition contains an amount of esters of citric acid.

11. A composition as claimed in claim 10, **characterised in that** the citric acid ester is present in an mount ranging between 0 and 5 wt. %.

12. A composition as claimed in any one of claims 1-11, **characterised in that** the aqueous phase thickening agent contains at least one component from the group of starch, modified starch, hydrocoloids such as guar or xanthan, or a mixture of two or more of these components.

13. A liquid food composition containing the pourable food thickening composition for thickening a water based liquid as claimed in any one of claims 1-12.

14. A Sauce containing the pourable food thickening composition for thickening a water based liquid as claimed in any one of claims 1-12.

15. A soup containing the pourable food thickening composition for thickening a water based liquid as claimed in any one of claims 1-12.

16. A filling containing the pourable food thickening composition for thickening a water based liquid as claimed in any one of claims 1-12.
